Europäisches Patentamt

European Patent Office

Office européen des brevets

(11) Publication number: **0 079 477**
**B1**

(12) EUROPEAN PATENT SPECIFICATION

(45) Date of publication of patent specification: **26.11.86**

(21) Application number: **82109685.6**

(22) Date of filing: **20.10.82**

(51) Int. Cl.⁴: **C 08 L 67/02,** C 08 L 69/00,
C 08 L 51/04

(54) Modified polyester compositions.

(30) Priority: **30.10.81 US 316946**

(43) Date of publication of application:
**25.05.83 Bulletin 83/21**

(45) Publication of the grant of the patent:
**26.11.86 Bulletin 86/48**

(84) Designated Contracting States:
**DE FR GB IT NL**

(56) References cited:
**WO-A-80/00972**
**DE-A-2 414 507**
**DE-A-2 835 653**
**US-A-3 864 428**
**US-A-3 987 004**

(73) Proprietor: **GENERAL ELECTRIC COMPANY**
**1 River Road**
**Schenectady New York 12305 (US)**

(72) Inventor: **Agarwal, Surendra Hukanchand**
**1406 S.E. Second Street**
**Evansville Indiana 47713 (US)**

(74) Representative: **Catherine, Alain**
**General Electric - Deutschland Munich Patent**
**Operations Frauenstrasse 32**
**D-8000 München 5 (DE)**

The file contains technical information
submitted after the application was filed and
not included in this specification

Courier Press, Leamington Spa, England.

**Description**

This invention relates to modified thermoplastic polyester compositions which make moldable articles of improved low temperature impact strength and thermal resistance. More particularly, the invention pertains to compositions of (a) a poly(1,4-butylene terephthalate) resin, a block poly(1,4-butylene terephthalate) ester copolymer resin, or a blend of either with poly(ethylene terephthalate) which are modified with (b) an effective amount of a resinous combination comprising (i) an acrylic or methacrylic grafted core shell polymer of a conjugated diene alone or in combination with a vinyl aromatic and (ii) an aromatic polycarbonate. Also provided are such compositions further including (c) fibrous glass reinforcement and/or (d) a flame retardant.

High molecular weight linear polyesters and copolyesters of glycols and terephthalic or isophthalic acid have been available for a number of years. These are described *inter alia* in, U.S. 2,465,319 and in U.S. 3,047,539. These patents disclose that the polyesters are particularly advantageous as film and fiber formers.

With the development of molecular weight control, the use of nucleating agents and two-step molding cycles, poly(ethylene terephthalate) has become an important constituent of injection moldable compositions. Poly(1,4-butylene terephthalate), because of its very rapid crystallization from the melt, is uniquely useful as a component in such compositions. Work-pieces molded from such polyester resins, alone or combined with reinforcements, in comparison with other thermoplastics, offer a high degree of surface hardness and abrasion resistance, high gloss, and lower surface friction.

Stable polyblends of poly(1,4-butylene terephthalate) and poly(ethylene terephthalate) can be molded into useful unreinforced and reinforced articles. See U.S. 3,953,394.

Block copolyesters containing units derived from poly(1,4-butylene terephthalate) and from an aromatic/aliphatic or aliphatic polyesters are also known. See, FR—A—7737998. Such block copolyesters are useful per se as molding resins and also in intimate combination with poly(1,4-butylene terephthalate) and/or poly(ethylene terephthalate).

It has been proposed to increase the impact strengths of polyesters by adding various modifiers. For example, U.S. 3,591,659 disclose that a useful family of modifiers comprises polyalkyl acrylates, methacrylates and/or ethacrylates. U.S. 4,044,073 disclose that a useful impact modifier for such polyesters is an aromatic polycarbonate. U.S. 4,022,748 discloses that a rubber-elastic graft copolymer having a glass temperature below −20°C, is a useful modifier, U.S. 4,034,013, and U.S. 4,096,202 disclose that useful impact modifiers comprise multiple stage polymers having a rubbery first stage and a hard final stage, preferably including units derived from alkyl acrylates, especially butyl acrylates. U.S. 4,034,016 (corres. German 2,650,870) discloses an impact modifier combination comprising a blend of a polyurethane and an aromatic polycarbonate. U.S. 4,203,887 discloses an impact modifier combination comprising a segmented block copolyester and an aromatic polycarbonate. U.S. 4,257,937 discloses an impact modifier combination comprising a blend of a polyalkylacrylate and an aromatic polycarbonate. U.S. 4,090,996 discloses an impact modifier combination for poly(1,4-butylene terephthalate) and other polyester resins comprising a selectively hydrogenated monoalkenyl arene-diene block copolymer, and an engineering thermoplastic, e.g., poly(aryl ether), poly(aryl sulfone), polycarbonate, acetal, etc. U.S. 3,864,428 discloses poly-(butylene terephthalate) alone or combined in blends with other polyesters, impact modified with conjugated diene/vinyl aromatic copolymers grafted with methacrylate monomer and aromatic polycarbonate. U.S. 4,180,494 discloses poly(butylene terephthalate), a core shell polymer having a butadiene core and up to 8 percent by weight of an aromatic polycarbonate. U.S. 4,280,948 discloses poly(butylene terephthalate) copolyesters impact modified with a combination of an acrylic or methacrylic monomer grafted polymer of a conjugated diene alone or combined with vinyl aromatic and an aromatic polycarbonate resin.

Although filled and/or reinforced and/or flame retardant modifications of the foregoing are described in the above-mentioned references, they lack one or more desirable attributes, when molded.

It has now been discovered that the addition of an acrylic or methacrylic monomer grafted core shell polymer of more than 50 weight percent of a conjugated diene, alone or in combination with a vinyl monomer, e.g., Rohm & Haas acryloid KM 653, and an aromatic polycarbonate, e.g., General Electric Company's Lexan®, to poly(1,4-butylene terephthalate), e.g., General Electric Company's Valox®, results in a composition which, when molded into parts shows good impact strength. While methacrylate-butadiene-styrene copolymers, not of the core-shell type, available from other sources, also give good impact strength at room temperature, e.g., 23°C, only the compositions made from the core shell polymers retain more than 70% of their impact strength at −40°C., making them uniquely suitable for automobile bumpers, ski bindings, and the like, where low-temperature impact resistance is all important. The compositions to be disclosed and claimed herein are believed to be superior in their low temperature resistance in comparison to those in US—A—3 864 428 and US—A—4 280 948 because the core shell polymer component (b) (i) used herein is structurally distinct from commonly employed methyl methacrylate-butadiene-styrene (MMBS) graft copolymers, and they are superior to those of US—A—4 180 494 because only a maximum of 8% by weight of aromatic polycarbonate is permitted therein, whereas applicant herein requires a minimum of at least 10% by weight of aromatic polycarbonate (b) (ii).

In preferred embodiments, as will be described later, the high temperature performance of the new compositions of this invention may also be improved by addition of antioxidants and stabilizers.

**0 079 477**

According to this invention, there are provided thermoplastic compositions which are useful for molding, e.g., injection molding, compression molding, transfer molding, and the like, the compositions comprising:

(a) from 30 to 80 parts by weight of a polyester comprising:

(i) a poly(1,4-butylene terephthalate) resin;
(ii) a block copolyester of poly(1,4-butylene terephthalate) and an aromatic/aliphatic polyester;
(iii) a blend of (i) and a poly(ethylene terephthalate) resin; or
(iv) a blend of (ii) and a poly(ethylene terephthalate) resin; and

(b) the balance to make 100 parts of (a) and (b) together of an impact modifier thereof comprising a combination of:

(i) from 10 to 30 parts by weight of an acrylic or methacrylic monomer grafted core shell polymer of a conjugated diene, alone or in combination with a vinyl monomer, the core being polymerized from over 50 weight percent of said diene; and
(ii) from 10 to 40 parts by weight of an aromatic polycarbonate resin.

The polyester resins (a) of the compositions of this invention are available commercially or can be prepared by known techniques such as transesterification of esters of terephthalic acid with ethylene glycol or butanediol and subsequent polymerization, by heating the glycols with the free acids or with halide derivatives thereof, and similar processes. These are described in U.S. 2,465,319 and 3,047,539, and elsehwere. A suitable poly-(1,4-butylene terephthalate) as defined under (a) (i) above is available commercially from General Electric Company, Pittsfield, Massachusetts, under the trade designation Valox® 303.

The block polyester resin component used in (a) (ii) above can be prepared by the transesterification of (a) straight or branched chain poly(1,4-butylene terephthalate) and (b) a copolyester of a linear aliphatic dicarboxylic acid and, optionally, an aromatic dibasic acid such as terephthalic or isophthalic acid with one or more straight or branched chain dihydric aliphatic glycols. For example a poly(1,4-butylene terephthalate) can be mixed with a copolyester of adipic acid, ethylene glycol, and heated at 235°C to melt the ingredients, then heated further under a vacuum until the formation of the copolyester is complete. As the second component, there can be substituted poly(neopentyl adipate), poly(1,6-hexylene azelate-coisophthalate), poly(1,6-hexylene adipate-coisophthalate) and the like. The procedures and products are described in the above-mentioned FR—A—7 737 998. A suitable copolyester as defined under (a) (ii) above is available commercially from General Electric Company, Pittsfield, Massachusetts, under the trade designation VALOX® 330.

The poly(ethylene terephthalate) resin component used as part of (a) (iii) and (a) (iv) of the compositions of this invention is available commercially or can be prepared by known techniques such as by the transesterification of esters of terephthalic acid with ethylene glycol with the free acids or with halide derivatives, and similar processes. These are described in U.S. 2,465,319, and U.S. 3,047,539, and elsewhere.

Illustratively, the high molecular weight polyesters will have an intrinsic viscosity of at least about 0.2 deciliters/g (20 cm$^3$/g) and preferably, at least about 0.4 deciliters/g (40 cm$^3$ g) as measured in a 60:40 phenol/tetrachloroethane mixture at 30°C, for poly(ethylene terephthalate) and at least 0.6 (60 cm$^3$/g) and more preferably 0.8 deciliters/g (80 cm$^3$/g), same basis, for poly(1,4-butylene terephthalate). Most preferably, for the former, the intrinsic viscosity will be in the range of 0.5 to 1.0 dl./g. (0 to 100 cm$^3$/g) and from 0.9 to 1.2 dl/g (90 to 120 cm$^3$/g) for the latter.

Especially useful when high melt strength is important are branched high melt viscosity poly(1,4-butylene terephthalate) resins, which include a small amount of e.g., up to 5 mole percent based on the terephthalate units, of a branching component containing at least three ester forming groups. The branching component can be one which provides branching in the acid unit portion of the polyester, or in the glycol unit portion, or it can be hybrid. Illustrative of such branching components are tri- or tetracarboxylic acids, such as trimesic acid, pyromellitic acid, and lower alkyl esters thereof, and the like, or preferably, polyols, and especially preferably, tetrols, such as pentaerythritol, triols, such as trimethylolpropane; or dihydroxy carboxylic acids are hydroxydicarboxylic acids and derivatives, such as tartaric acid, and the like.

The branched poly(1,4-butylene terephthalate) resins and their preparation are described in U.S. 3,953,404, incorporated herein by reference.

Impact modifier (b) comprises a combination of (i) an acrylic or methacrylic monomer grafted polymer of a conjugated diene alone or copolymerized with a vinyl aromatic compound and (ii) an aromatic polycarbonate. The graft copolymer resin (b) (i) must be made in such a way to distinguish it from those available commercially from Borg-Warner Corp., under the trade designation Blendex®, and those available from Kanegafuchi Chemical Industry Co. of Japan under the trade designation Kane® ACE.

In general, only the core shell polymers of the type available from Rohm & Haas under the trade designation Acryloid® KM 653 can be used, especially those containing units derived from butadiene or

3

isoprene, alone or in combination with a vinyl aromatic compound. These are believed to be described in the above-mentioned US—A—4 180 494. Especially preferably, the copolymer component (b) (i) will comprise a three stage polymer having a butadiene-based rubbery core, a second stage polymerized from styrene, and a final stage, or shell, polymerized from methyl methacrylate, and 1,3-butylene glycol dimethacrylate. The polycarbonate resins (b) (ii) can be made in known ways and they are available commercially from sources, e.g., General Electric Company, Pittsfield, Massachusetts, U.S.A., under the trademark Lexan®. In general, any of the aromatic polycarbonates described in U.S. 4,034,016 can be used, especially those including units derived from bisphenol-A.

The fibrous (filamentous) glass can be untreated, but preferably, it will be treated with silane or titanate coupling agents, etc. The filamentous glass to be employed in such embodiments of the present compositions is well known to those skilled in the art and is widely available from a number of manufacturers. For compositions ultimately to be employed for electrical uses, it is preferred to use fibrous glass filaments comprised of lime-aluminium borosilicate glass that is relatively soda free. This is known as "E" glass. However, other glasses are useful where electrical properties are not so important, e.g., the low soda glass known as "C" glass. The filaments are made by standard processes, e.g., by steam or air blowing, flame blowing and mechanical pulling. The preferred filaments for plastic reinforcement are made by mechanical pulling.

The length of the glass filaments and whether or not they are bundled into fibers and the fibers bundled in turn to yarns, ropes or rovings, or woven into mats, and the like, are also not critical to the invention. However, in preparing the molding compositions, it is convenient to use the filamentous glass in the form of chopped strands of from about 0,32 cm to about 5,08 cm long. In articles molded from the compositions, on the other hand, even shorter lengths will be encountered because, during compounding, considerable fragmentation will occur. This is desirable, however, because the best properties are exhibited by thermoplastic injection molded articles in which the filament lengths lie between about 0,0013 to 0,32 cm.

The amount of the filler can vary widely depending on the formulation and needs of the particular composition. Preferably, however, the filler will comprise from about 0 to about 60%' by weight of filler (c) and (a) and (b), combined. Especially preferably the filler will comprise less than about 40% by weight of the combination.

It has further been found that specific amounts of the modifier (b) are necessary to provide significant improvements in low-temperature impact strength, and the like. In general polyester composition (a) comprises from 40 to 75 parts by weight, impact modifier (b) (i) comprises from 10 to 20 parts by weight and (b) (ii) comprises 10 to 40 parts by weight per 100 parts by weight of (a), (b) (i) and (b) (ii) together. Preferably, impact modifiers (b) (i) and (b) (ii) each are present in an amount of from about 12 to about 18 parts by weight per 100 parts by weight of (a), (b) (i), and (b) (ii) together.

The impact modified polyesters alone, or in combination with glass and/or filler can be rendered flame retardant with an effective amount of a conventional flame retardant agent (d). As is well known, flame retardants can be based on elementary red phosphorus, phosphorus compounds, halogen and nitrogen compounds alone or preferably in further combination with synergists, such as antimony compounds. Especially useful are polymeric and oligomeric flame retardant agents comprising tetrabromobisphenol-A carbonate units, see, for example, U.S. 3,833,685.

Other ingredients, such as dyes, pigments, drip retardants, and the like can be added for their conventionally employed purposes.

As has been mentioned, in preferred embodiments, thermal stability is improved by adding a package of stabilizers, in general, thermal stability of all MMBS polymers is poor due to the presence of unsaturation. It has been found that the aging behavior of the instant compositions is made satisfactory by incorporating a combination of hindered phenols, aromatic amines, thioesters and phosphites. To some extent, low temperature impact properties also depend on the antioxidant system used. In any event, the preferred stabilizer combination comprise (e) a hindered phenolic antioxidant, (f) an aromatic amine, (g) a thioester, and, optionally, (h) a trivalent phosphorus compound, e.g., a phosphite. The preferred amounts are from 0.25 to 1.5 parts each of (e), (f) and (h) and from 0.5 to 5 parts of (g), per 100 parts by weight of (a), (b) and (c) together.

The compositions of this invention can be prepared by a number of procedures. In one way, the modifier and, optionally, reinforcing glass and/or fire retardants, and stabilizers, is put into an extrusion compounder with resinous components to produce molding pellets. The modifier and other ingredients are dispersed in a matrix of the resin in the process. In another procedure, the modifier and any reinforcing glass and/or flame retardants and/or stabilizers is mixed with the resins by dry blending, then either fluxed on a mill and comminuted, or then are extruded and chopped. The modifying agent and any other ingredients can also be mixed with the resins and directly molded, e.g., by injection or transfer molding techniques.

It is always important to thoroughly free all of the ingredients; resin, modifier, reinforcement and/or filler, flame retardants and any optional, conventional additives from as much as water as possible.

In addition, compounding should be carried out to ensure that the residence time in the machine is short, the temperature is carefully controlled; the friction heat is utilized; and an intimate blend between the resin and the modifier and any other ingredients is obtained.

4

**0 079 477**

Although it is not essential, best results are obtained if the ingredients are pre-compounded, pelletized and then molded. Pre-compounding can be carried out in conventional equipment. For example, after carefully predrying the polyester and modifier e.g., for four hours at 121°C, a single screw extruder is fed with a dry blend of the ingredients, the screw employed having a long transition section to ensure proper melting. On the other hand, a twin screw extrusion machine, e.g., a 53 mm Werner Pfleiderer machine can be fed with resin and additives at the feed port and reinforcement down stream. In either case, a generally suitable machine temperature will be about 199°C to 260°C, resulting in a melt temperature of 232°C to 293°C.

The pre-compounded composition can be extruded and cut up into molding compounds such as conventional granules, pellets, etc., by standard techniques.

The composition can be molded in any equipment conventionally used for thermoplastic compositions, e.g., a Van Dorn type injection molding machine with conventional cylinder temperatures, e.g. 216°—288°C, and conventional mold temperatures, e.g., 54°—93°C.

Description of the preferred embodiments

The following examples illustrate the invention. They are set forth as a further description but are not to be construed as limiting the invention thereto.

Examples 1—6

Dry blends of poly(1,4-butylene terephthalate) resin, polybutadiene-styrene-methyl methacrylate core shell polymer and aromatic polycarbonate of bisphenol-A and phosgene and mold release/stabilizer are compounded and extruded at 266°C melt temperature in an extruder. For comparison purposes a different MMBS polymer is also blended. The extrudates are pelletized and injection molded at 243°C stock temperature (mold temperature 66°C). The formulations and physical properties are shown in Table 1.

5

TABLE 1

Compositions comprising polyester, BD-S-MMA core shell polymer and polycarbonate

| Example<br>Composition (parts by weight) | 1 | 2 | 3 | 4 | 5 | 6 | A |
|---|---|---|---|---|---|---|---|
| Poly(1,4-butylene terephthalate[a] | 68.3 | 67.0 | 67.0 | 67.0 | 65.5 | 65.5 | 68.3 |
| S/B/MMA core shell polymer[b][i] | 15.0 | 15.0 | 15.0 | 15.0 | 15.0 | 15.0 | — |
| Aromatic Polycarbonate[b][ii] | 15.0 | 15.0 | 15.0 | 15.0 | 15.0 | 15.0 | 15.0 |
| Polyethylene* | 1.5 | 1.5 | 1.5 | 1.5 | 1.5 | 1.5 | 1.5 |
| Hindered phenolic antioxidant[e][i] | .15 | — | — | — | — | — | 0.15 |
| Phosphite stabilizer[h] | .05 | — | — | — | — | — | .05 |
| Hindered phenolic antioxidant[e][ii] | — | 0.5 | — | — | — | — | — |
| Hindered phenolic antioxidant[e][iii] | — | — | — | — | 0.5 | — | — |
| Hindered phenolic antioxidant[e][iv] | — | — | — | — | — | 0.5 | — |
| Hindered phenolic antioxidant[e][v] | — | — | — | 0.5 | — | — | — |
| Aromatic amine stabilizer[f] | — | — | 0.5 | — | 0.5 | 0.5 | — |
| Distearylthiodipropionate[g] | — | 1.0 | 1.0 | — | — | 2.0 | — |
| Dilaurylthiodipropionate[g] | — | — | — | 1.0 | 2.0 | — | — |
| MMBS graft polymer** | — | — | — | — | — | — | 15.0 |
| **Properties**<br>Notched Izod Impact Strength, $10^{-1}$ kg.m/mm at −40°C | 0.78 | 0.57 | 0.54 | 0.777 | 0.55 | 0.84 | 0.18 |
| Notched Izod Impact Strength, $10^{-1}$ kg.m/mm at 23°C | 1.04 | 0.97 | 0.99 | 0.79 | 0.55 | 0.98 | 1.05 |
| Notched Izod Impact Strength, $10^{-1}$ kg.m/mm at 23°C after aging for 24 hrs. at 170°C | 0.26 | 0.65 | 0.83 | 0.78 | 0.47 | 0.84 | 0.032 |

[a] Valox® 303 General Electric Co.
[b][i] Acryloid® KM 653, Rohm & Haas Co.
[b][ii] Lexan® 135, General Electric Co.
*Microthane
[e][i] Irganox® 1093, Ciba Geigy

[h] Ferro® 904, Ferro Chemicals
[e][ii] Irganox® 1076, Ciba Geigy
[e][iii] Goodrite® 3114, B. F. Goodrich
[e][iv] Goodrite® 3125, B. F. Goodrich

[e][v] Topanol® CA, ICI Americas
[f] Naugard® 445, Uniroyal
[g] DSTDP and DLTDP, Argus Chemical
** Blendex® IIIF, Borg-Warner Co.

A comparison of Example 1 with comparative Example A shows the dramatic loss in low temperature impact strength when 15 parts of the S/B/MMA core shell polymer is replaced with MMBS graft copolymer. This is also found when the following MMBS copolymers are substituted: B22, B28 and B31 (obtained from Kanegafuchi Chemical Industry Company).

The data also show that the relatively low thermal stability of Example 1 is significantly improved by incorporation of antioxidants. The combinations of Examples 3 and 4 in this respect are seen to be superior.

Example 7

A composition is prepared according to the general procedure of Examples 1—6, molded and tested with the following results:

| Example<br>Composition (parts by weight) | 7 |
| --- | --- |
| Poly(1,4-butylene terephthalate[a] | 66.5 |
| S/B/MMA core shell polymer[b][i] | 15.0 |
| Aromatic Polycarbonate[b][ii] | 15.0 |
| Polyethylene* | 1.5 |
| Hindered phenolic antioxidant[e][v] | 0.5 |
| Thioester[g][i] | 1.0 |
| Aromatic Amine[f][i] | 0.5 |
| Properties<br>Notched Izod Impact Strength, $10^{-1}$ kg.m/mm at −40°C | 0.85 |
| Notched Izod Impact Strength, $10^{-1}$ kg.m/mm at 23°C | 0.99 |
| Notched Izod Impact Strength, $10^{-1}$ kg.m/mm at 23°C<br>after aging for 24 hrs. at 170°C | 0.81 |

[a], [b][i], [b][ii], *, [e][v]—see footnote Table 1.
[g][i]—Seenox® 412S, Argus; [f][i] Naugard® P, Uniroyal

The low temperature impact properties of this new formulation are greatly improved with retention of all other important properties and good high temperature performance.

7

Examples 8—9

Two compositions according to this invention are prepared, molded and tested according to the procedures set forth above for Examples 1—6, with the following results:

| Example<br>Composition (parts by weight) | 8 | 9 |
|---|---|---|
| Poly(1,4-butylene terephthalate[a] | 65 | 44.5 |
| S/B/MMA core shell polymer[b)(i] | 15 | 15 |
| Aromatic polycarbonate[b)(ii] | 15 | 35 |
| Polyethylene* | 1.5 | 2.0 |
| Hindered phenolic antioxidant[e)(v] | 0.5 | 0.5 |
| Aromatic amine[f] | 0.5 | 0.5 |
| Thioester[g)(i] | 2.0 | 2.0 |
| Phosphite[h)(i] | 0.5 | 0.5 |
| Properties<br>Notches Izod Impact Strength $10^{-1}$ kg.m/mm at −40°C | 0.87 | 0.62 |
| Notched Izod Impact Strength, $10^{-1}$ kg.m/mm at 23°C | 0.92 | 0.767 |
| Notched Izod Impact Strength, $10^{-1}$ kg.m/mm at 23°C<br>after aging for 24 hrs. at 170°C | 0.84 | 0.65 |

[a], [b)(i)], [b)(ii)], *, [e)(v)], [f] and [g)(i)], see above.
[h)(i)] Trisonylphenylphosphite, Wytox® 312, Stepan

Such compositions provide thermally stabilized molding compositions which produce articles having high impact strength retention at low temperatures.

# 0 079 477

Example 10

A glass-reinforced, flame retardant composition according to this invention is prepared, molded and tested according to the procedures set forth above for Examples 1—6 with the following results:

| Example Composition (parts by weight) | 10 |
| --- | --- |
| Poly(1,4-butylene terephthalate)[a] | 35.65 |
| Glass fiber reinforcement (0.32 cm) | 30.0 |
| Copoly(carbonate of bisphenol-A-tetrabromobisphenol-A) flame retardant[d][i] | 9.5 |
| $Sb_2O_3$ concentrate[d][ii] | 4.0 |
| S/B/MMA core shell polymer[b][i] | 10.0 |
| Aromatic polycarbonate[b][ii] | 10.0 |
| Hindered phenolic antioxidant[e][i] | 0.15 |
| Mold release, PE-18[e][ii] | 0.2 |
| Grey pigment | 0.5 |
| Properties Notched Izod Impact $10^{-1}$ kg.m/mm at $-30°C$ | 0.09 |
| at $-23°C$ | 0.15 |
| Unnotched Izod impact | 0.72 |
| Flexural strength, $daN/mm^2$ | 15.71 |
| Flexural modulus, $daN/mm^2$ | 519.5 |
| Tensile strength, $daN/mm^2$ | 9.99 |
| Flammability Underwriters' Labs., Bull. 94, 1.52 mm | V—O |

[a] Valox® 295, General Electric
[b][i] Acryloid® KM653 Rohm & Haas 100 p; Seenox 412 S, 13.3 p; Topanol® CA, 3.3 p; Naugard 445.
[b][ii] Lexan® 121, General Electric,
[d][i] FR25, General Electric
[d][ii] Antimony oxide 80-low density polyethylene 20
[e][i] Irganox® 1093, Ciba-Geigy
[e][ii] PE-18, pentaerythritol tetrastearate.

It is seen that a reinforced flame retardant material is obtained, from which is produced workpieces with excellent low temperature impact resistance.

Obviously, other modifications and variations of the present invention are possible in the light of the above teachings. For example, 10 and 20 parts by weight of fibrous glass reinforcement can be added to the compositions set forth in Examples 1—9 to provide reinforced modifications. A copolyester of poly(1,4-butylene terephthalate) and a hydroxy-terminated polyester, e.g., Valox® 330 of General Electric Company can be substituted for the linear polyester and either can be partially replaced with poly(ethylene terephthalate).

## Claims

1. A thermoplastic composition comprising:
(a) from 30 to 80 parts by weight of a polyester composition comprising:

(i) a poly(1,4-butylene terephthalate) resin;

9

(ii) a block copolyester of poly(1,4-butylene terephthalate) and an aromatic/aliphatic or aliphatic polyester;
(iii) a blend of (i) and a poly(ethylene terephthalate) resin; or
(iv) a blend of (ii) and a poly(ethylene terephthalate) resin; and

(b) the balance to make 100 parts of (a) and (b) together of an impact modifier thereof, characterized in that the impact modifier comprises:

(i) from 10 to 30 parts by weight of an acrylic or methacrylic monomer grafted core shell polymer of a conjugated diene, alone or in combination with a vinyl monomer, the core being polymerized from over 50 weight percent of said diene; and
(ii) from 10 to 40 parts by weight of an aromatic polycarbonate resin.

2. A composition as defined in Claim 1 wherein the polyester composition (a) comprises from 40 to 75 parts by weight, impact modifier (b)(i) comprises from 10 to 20 parts by weight, and (b)(ii) comprises 10 to 40 parts by weight per 100 parts by weight of (a), (b)(i) and (b)(ii) together.

3. A composition as defined in claim 1 wherein the impact modifier (b)(i) and (b)(ii) each are present in an amount of from about 12 to about 18 parts by weight per 100 parts by weight of (a), (b)(i) and (b)(ii) together.

4. A composition as defined in claim 1 wherein said poly(1,4-butyleneterephthalate) in component (a) has an intrinsic viscosity of at least about 0.9 dl/g (90 cm$^3$/g) when measured in a solution in a 60:40 mixture of phenol and tetrachloroethane at 30°C.

5. A composition as defined in claim 4 wherein said poly(ethylene terephthalate) in component (a) has an intrinsic viscosity of at least about 0.5 dl/g (50 cm$^2$/g) when measured in a solution in a 60:40 mixture of phenol and tetrachloroethane at 30°C.

6. A composition as defined in claim 1 wherein component (a)(i) is a high melt viscosity branched (1,4-butylene terephthalate) resin which includes a small amount of a branching component containing at least three ester forming groups.

7. A composition as defined in claim 1 wherein in graft core shell polymer component (b)(i), the conjugated diene polymer comprises, butadiene or isoprene, alone or in combination with a vinyl aromatic compound and the grafted monomer is a methacrylic monomer.

8. A composition as defined in claim 7 wherein said core shell polymer comprises units of butadiene, styrene and a $C_1$—$C_6$ alkyl methacrylate.

9. A composition as defined in claim 8 wherein in said core shell polymer the $C_1$—$C_6$ methacrylate is methyl.

10. A composition as defined in claim 1 wherein said aromatic polycarbonate resin includes units derived from bisphenol-A.

11. A composition as defined in claim 1 which also includes (c) fibrous glass reinforcing agent in an amount of from about 1 to about 60 parts by weight per 100 parts by weight of (a), (b) and (c) together.

12. A composition as defined in claim 1 which also includes (d) a flame-retardant amount of a flame retarding agent.

13. A composition as defined in claim 1 which also includes (fibrous glass reinforcing agent in an amount of from about 1 to about 60 parts by weight per 100 parts by weight of (a), (b) and (c) together and (d) a flame-retardant amount of a flame retarding agent.

14. A composition as defined in claim 1 which also includes (e) a hindered phenolic antioxidant in an amount of from 0.25 to 1.5 parts by weight, (f) an aromatic amine in an amount of from 0.25 to 1.5 parts by weight, (g) a thioester stabilizer in an amount of from 0.5 to 5.0 parts by weight and, optionally, (h) a trivalent phosphorus stabilizer in an amount of from 0.25 to 1.5 parts by weight per 100 parts by weight of (a), (b) and (c), together.

**Patentansprüche**

1. Thermoplastische Zusammensetzung, enthaltend
(a) von 30 bis 80 Gewichtsteile einer Polyester-Zusammensetzung, enthaltend:

(i) ein Poly(1,4-butylenterephthalat)-Harz,
(ii) einen Block-Copolyester aus Poly(1,4-butylenterephthalat) und einem aromatisch/aliphatischen oder aliphatischen Polyester,
(iii) eine Mischung aus (i) und einem Poly(äthylenterephthalat)-Harz oder
(iv) eine Mischung aus (ii) und einem Poly(äthylenterephthalat)-Harz und

(b) den Rest zur Herstellung von 100 Teilen (a) und (b) zusammen mit einem Schlagmodifiziermittel dafür, dadurch gekennzeichnet, daß das Schlagmodifiziermittel

(i) von 10 bis 30 Gewichtsteile eines Acryl- oder Methacrylmonomeren-gepfropften Kern-Hülle-Polymeren von einem konjugierten Dien, allein oder in Kombination mit einem Vinylmonomeren, wobei der Kern aus über 50 Gewichtsprozent des Diens polymerisiert ist und

(ii) von 10 bis 40 Gewichtsprozent eines aromatischen Polycarbonat-Harzes, enthält.

2. Zusammensetzung nach Anspruch 1, dadurch gekennzeichnet, daß die Polyester-Zusammensetzung (a) von 40 bis 75 Gewichtsteile, das Schlagmodifiziermittel (b)(i) von 10 bis 20 Gewichtsteile und (b)(ii) 10 bis 40 Gewichtsteile pro 100 Gewichtsteile von (a), (b)(i) und (b)(ii) zusammen, enthält.

3. Zusammensetzung nach Anspruch 1, dadurch gekennzeichnet, daß das Schlagmodifiziermittel (b)(i) und (b)(ii) jeweils in einer Menge von etwa 12 bis etwa 18 Gewichtsteilen pro 100 Gewichtsteile von (a), (b)(i) und (b)(ii) zusammen, vorhanden sind.

4. Zusammensetzung nach Anspruch 1, dadurch gekennzeichnet, daß das Poly(1,4-butylen-terephthalat) in Komponente (a) eine intrinsic viscosity von zumindest etwa 0,9 dl/g (90 cm$^3$/g) aufweist, wenn es in einer Lösung in einer 60:40-Mischung von Phenol und Tetrachloräthan bei 30°C gemessen wird.

5. Zusammensetzung nach Anspruch 4, dadurch gekennzeichnet, daß das Poly(äthylenterephthalat) in Komponente (a) eine intrinsic viscosity von zumindest etwa 0,5 dl/g (50 cm$^3$/g) aufweist, wenn es in einer Lösung in einer 60:40-Mischung von Phenol und Tetrachloräthan bei 30°C gemessen wird.

6. Zusammensetzung nach Anspruch 1, dadurch gekennzeichnet, daß die Komponente (a)(i) ein verzweigtes (1,4-Butylenterephthalat)-Harz mit hoher Schmelzviskosität ist, welches eine kleine Menge einer verzweigenden Komponente, enthaltend zumindest drei esterbildende Gruppen, einschließt.

7. Zusammensetzung nach Anspruch 1, dadurch gekennzeichnet, daß in der gepfropften Kern-Hülle-Polymer-Komponente (b)(i) des konjugierte Dien-Polymere Butadien oder Isopren, allein oder in Kombination mit einer vinylaromatischen Verbindung, enthält, und das gepfropfte Monomere ein Methacrylmonomeres ist.

8. Zusammensetzung nach Anspruch 7, dadurch gekennzeichnet, daß das Kern-Hülle-Polymere Einheiten von Butadien, Styrol und einem $C_1$—$C_6$-Alkylmethacrylat enthält.

9. Zusammensetzung nach Anspruch 8, dadurch gekennzeichnet, daß in dem Kern-Hülle-Polymeren das $C_1$—$C_6$-Methacrylat Methyl ist.

10. Zusammensetzung nach Anspruch 1, dadurch gekennzeichnet, daß das aromatische Polycarbonat-Harz Einheiten einschließt, die sich von Bisphenol-A ableiten.

11. Zusammensetzung nach Anspruch 1, dadurch gekennzeichnet, daß sie ferner (c) faseriges Glasverstärkungsmittel in einer Menge im Bereich von etwa 1 bis etwa 60 Gewichtstellen pro 100 Gewichtsteile von (a), (b) und (c) zusammen, enthält.

12. Zusammensetzung nach Anspruch 1, dadurch gekennzeichnet, daß sie ferner noch (d) eine feuerhemmende Menge eines feuerhemmenden Mittels enthält.

13. Zusammensetzung nach Anspruch 1, dadurch gekennzeichnet, daß sie ferner noch faseriges Glasverstärkungsmittel in einer Menge im Bereich von etwa 1 bis etwa 60 Gewichtsteilen pro 100 Gewichtsteile (a), (b) und (c) zusammen und (d) eine feuerhemmende Menge eines feuerhemmenden Mittels, enthält.

14. Zusammensetzung nach Anspruch 1, dadurch gekennzeichnet, daß sie ferner noch (e) ein sterisch gehindertes phenolisches Antioxidationsmittel in einer Menge im Bereich von 0,25 bis 1,5 Gewichtsteilen, (f) ein aromatisches Amin in einer Menge im Bereich von 0,25 bis 1,5 Gewichtsteilen, (g) einen Thioester-Stabilisator in einer Menge im Bereich von 0,5 bis 5,0 Gewichtsteilen und, gegebenenfalls, (h) einen dreiwertigen Phosphor-Stabilisator in einer Menge im Bereich von 0,25 bis 1,5 Gewichtsteilen pro 100 Gewichtsteile (a), (b) und (c) zusammen, enthält.

**Revendications**

1. Composition thermoplastique comprenant:
(a) de 30 à 80 parties en poids d'une composition de polyester comprenant:

(i) une résine de poly(téréphtalate de butylène-1,4);
(ii) un copolyester séquencé de poly(téréphtalate de butylène-1,4) et d'un polyester aromatique/aliphatique ou aliphatique;
(iii) un mélange de (i) et d'une résine de poly(téréphtalate d'éthylène); ou
(iv) un mélange de (ii) et d'une résine de poly(téréphtalate d'éthylène); et

(b) le complément à 100 parties de (a) et (b) ensemble d'un modificateur de la résistance au choc, caractérisé en ce que le modificateur de la résistance au choc comprend:

(i) de 10 à 30 parties en poids d'un polymère à enveloppe et noyau à monomère acrylique ou mèthacrylique greffé d'un diène conjugué, seul ou en combinaison avec un monomère de vinyle, le noyau étant polymérisé à partir de plus de 50 pourcent en poids du diène; et
(ii) de 10 à 40 parties en poids d'une résine de polycarbonate aromatique.

2. Composition selon la revendication 1, dans laquelle la composition de polyester (a) constitue de 40 à

11

75 parties en poids, le modificateur de la résistance au choc (b)(i) constitue de 10 à 20 parties en poids, et (b)(ii) constitue de 10 à 40 parties en poids pour 100 parties en poids de (a), (b)(i) et (b)(ii) ensemble.

3. Composition selon la revendication 1, dans laquelle le modificateur de la résistance au choc (b)(i) et (b)(ii) sont chacun présents en une quantité d'environ 12 à environ 18 parties en poids pour 100 parties en poids de (a), (b)(i) et (b)(ii) ensemble.

4. Composition selon la revendication 1 dans laquelle ledit poly(téréphtalate de butylène-1,4) dans le composant (a) a un indice limite de viscosité d'au moins environ 0,9 dl/g (90 cm³/g) mesuré en solution danu un mélange 60:40 de phénol et de tétrachloroéthane à 30°C.

5. Composition selon la revendication 4 dans laquelle ledit poly(téréphtalate d'éthylène) dans le composant (a) a un indice limite de viscosité d'au moins environ 0,5 dl/g (50 cm³/g) mesuré en solution dans un mélange 60:40 de phénol et de tétrachloroéthane à 30°C.

6. Composition selon la revendication 1 dans laquelle le composant (a)(i) est une résine de poly(téréphtalate de butylène-1,4) ramifié de viscosité de fusion élevée qui comprend und petite quantité d'un composant de ramification contenant au moins trois groupes de formation d'ester.

7. Composition selon la revendication 1, dans laquelle dans le composant (b)(i) du polymère à enveloppe et noyau greffé, le polymère de diène conjugué comprend, du butadiène ou de l'isoprène, seul ou en combinaison avec un composé aromatique vinylique et le monomère greffé est un monomère de méthacrylate.

8. Composition selon la revendication 7 dans laquelle le polymère à enveloppe et noyau comprend des motifs butadiène, styrène et d'un méthacrylate d'alkyle en $C_1$—$C_6$.

9. Composition selon la revendication 8 dans laquelle dans ledit polymère à enveloppe et noyau le méthacrylate en $C_1$—$C_6$ est le méthyle.

10. Composition selon la revendication 1, dans laquelle la résine de polycarbonate aromatique comporte des motifs dérivés du bisphénol-A.

11. Composition selon la revendication 1 qui comporte également (c) un agent de renforcement en fibres de verre en une quantité d'environ 1 à environ 60 parties en poids pour 100 parties en poids de (a), (b) et (c) ensemble.

12. Composition selon la revendication 1 qui comporte également (d) une quantité ignifugeante d'un agent d'ignifugation.

13. Composition selon la revendication 1 qui comprend également un agent de renforcement en fibres de verre en une quantité d'environ 1 à environ 60 parties en poids pour 100 parties en poids de (a), (b) et (c) ensemble et (d) une quantité ignifugeante d'un agent d'ignifugation.

14. Composition selon la revendication 1 qui comprend également (e) un antioxydant phénolique stériquement encombré en une quantité de 0,25 à 1,5 parties en poids, (f) une amine aromatique en une quantité de 0,25 à 1,5 parties en poids, (g) un thioester comme stabilisant en une quantité de 0,5 à 5,0 parties en poids et, facultativement, (h) un phosphore trivalent comme stabilisant en une quantité de 0,25 à 1,5 parties en poids pour 100 parties en poids de (a), (b) et (c) ensemble.